# EUROPÄISCHE PATENTSCHRIFT

(11) **EP 2 630 463 B1**
(45) Veröffentlichungstag und Bekanntmachung des Hinweises auf die Patenterteilung: **04.10.2017**
(21) Anmeldenummer: 11778803.4
(22) Anmeldetag: 18.10.2011
(51) Int. Cl.: G01M 11/06, B60Q 1/08, G01S 17/06, F21S 8/10, G01S 17/93, G01S 7/497

(54) **VERFAHREN UND VORRICHTUNG ZUR ÜBERPRÜFUNG EINES LICHTTECHNISCHEN FAHRASSISTENZSYSTEMS**
METHOD AND APPARATUS FOR CHECKING A LIGHTING DRIVING ASSISTANCE SYSTEM
PROCÉDÉ ET DISPOSITIF DE CONTRÔLE D'UN SYSTÈME PHOTOMÉTRIQUE D'ASSISTANCE À LA CONDUITE

(30) Priorität: 18.10.2010 DE 102010049047
(43) Veröffentlichungstag der Anmeldung: 28.08.2013
(73) Patentinhaber: Hella KGaA Hueck & Co., 59552 Lippstadt (DE)
(72) Erfinder: SCHMIDT, Christian, 33106 Paderborn (DE); HOFFMANN, Ingo, 13089 Berlin (DE)
(74) Vertreter: Pfenning, Meinig & Partner mbB
(86) Internationale Anmeldenummer: PCT/EP2011/005441
(87) Internationale Veröffentlichungsnummer: WO 2012/052187

(56) Entgegenhaltungen:
- EP-A1- 2 128 590
- EP-A2- 1 316 474
- DE-A1- 19 932 294
- DE-A1-102004 060 474
- DE-A1-102008 031 159

## Beschreibung

Die Erfindung betrifft ein Verfahren und eine Vorrichtung zur Überprüfung eines lichttechnischen Fahrassistenzsystems von Fahrzeugen.

Die Druckschrift DE 10 2008 031 159 A1 beschreibt ein gattungsgemäße Verfahren zur Dejustageerkennung eines Scheinwerfers eines Fahrzeug mit einem Kamerasystem.

Fahrzeuge weisen aus Gründen der Verkehrssicherheit Beleuchtungsvorrichtungen wie beispielsweise Scheinwerfer auf. Seit einigen Jahren werden zur optimalen Ausleuchtung des Verkehrsraums durch Beleuchtungsvorrichtungen lichttechnische Fahrassistenzsysteme, z. B. dynamisches Kurvenlicht, in Fahrzeugen verwendet. Diese Fahrassistenzsysteme sollen einerseits eine maximal mögliche Ausleuchtung des Verkehrsraums zur Unterstützung des Fahrers ermöglichen, andererseits aber auch verhindern, dass andere Verkehrsteilnehmer unzulässig geblendet werden. Dem tragen moderne Systeme wie das AFS (Advanced Frontlighting System) in Kraftfahrzeugen Rechnung, bei denen Scheinwerferlicht nicht nur dem Straßenverlauf folgt, sondern den Verkehrsraum auch in Abhängigkeit von der Geschwindigkeit ausleuchtet.

Dazu werden über eine Kamera Bilder des Verkehrsraums aufgenommen, über eine Bildverarbeitung ausgewertet und die Beleuchtungsvorrichtung entsprechend nachgeführt. Allerdings arbeiten auch moderne Systeme nicht vollkommen fehlerfrei, sodass es durch falsch vorgenommene Einstellungen des Fahrassistenzsystems immer noch zu Beeinträchtigungen anderer Verkehrsteilnehmer, beispielsweise durch Blendungen, kommen kann. Aus dem Stand der Technik sind daher Verfahren zur Kalibrierung von Fahrassistenzsystemen bekannt. So offenbart DE 10 2008 025 459 A1 ein Verfahren zur Kalibrierung einer vertikalen Hell-Dunkel-Grenze. Nachteilig an den bekannten Verfahren ist, dass die Überprüfung der korrekten Funktionsweise des Fahrassistenzsystems in der Regel nur durch fachkundiges und erfahrenes Personal und eine endgültige Überprüfung des Zusammenwirkens von Kamera und Scheinwerfer abschließend nur durch eine Nachtfahrt möglich ist. Der Erfindung liegt damit die Aufgabe zugrunde, ein Verfahren und eine Vorrichtung zu schaffen, die es ermöglichen, im Rahmen von standardisierten Servicetätigkeiten die allgemeine Funktion von Fahrassistenzsystemen zu überprüfen und etwaige Einstellungsfehler zu ermitteln.

Diese Aufgabe wird erfindungsgemäß gelöst durch ein Verfahren mit den Merkmalen des Anspruchs 1 sowie durch eine Vorrichtung mit den Merkmalen des unabhängigen Anspruchs 9. Vorteilhafte Weiterbildungen werden in den Unteransprüchen beschrieben.

Ein erfindungsgemäßes Verfahren sieht vor, dass ein Fahrzeug mit mindestens einer Leuchte und mindestens einer Bilderfassungseinheit vor einem Körper mit vorzugsweise planer Oberfläche positioniert wird, wobei das von der Leuchte ausgehende Licht auf den Körper trifft. Bei der Leuchte wird es sich typischerweise um einen Scheinwerfer handeln. Dann wird der Schwenkbereich der Leuchte durchfahren, indem die Leuchte um definierte Winkel in mehrere Winkelpositionen geschwenkt wird. Dies kann in horizontaler und/oder vertikaler Richtung erfolgen. Eine Vielzahl aufgenommener Werte kann hierbei der Plausibilisierung des Verfahrens und zur Überprüfung anhand möglichst vieler Messwerte dienen. Bei der Leuchte kann es sich insbesondere um einen Frontscheinwerfer handeln, der auf Abblendlicht oder, sofern vorhanden, blendfreies Fernlicht gestellt wird. In jeder neu eingestellten Winkelposition wird ein Bild der auf der Oberfläche des Körpers erhaltenen Helligkeitsverteilung durch die Bilderfassungseinheit aufgenommen.

Aus den erhaltenen Helligkeitsverteilungen können durch eine Bildverarbeitung charakteristische Punkte der Helligkeitsverteilung, z. B. die Position eines Knickpunkts oder des Anstiegs der vertikalen Hell-Dunkel-Grenze (vHDG), ermittelt werden. Der Knickpunkt sei dabei definiert als der Schnittpunkt zwischen einer Abschneidelinie und einer schrägen Begrenzungslinie einer Lichtverteilung, insbesondere einer Abblendlichtverteilung. Hierbei kann bereits eine erste, noch nicht näher spezifizierte Funktionsprüfung des Systems erfolgen, insbesondere der Bilderfassungseinheit und der Schwenkung der Leuchten. Dabei kann geprüft werden, ob nach jeder Aufnahme der Knickpunkt bzw. der Anstieg der Helligkeit an der Hell-Dunkel-Grenze an verschiedenen Bildkoordinaten gefunden wird, ist dies nicht der Fall, liegt ein Fehler vor.

Aus den erhaltenen Helligkeitsverteilungen und den Messwerten werden über trigonometrische Verfahren ein eventuell vorhandener Winkelversatz bei der Positionierung zwischen Leuchte und Körper sowie der Abstand zwischen beiden Objekten berechnet. So wird die Position des Körpers in einem Koordinatensystem des Fahrzeugs ermittelt. Dazu kann auch ein anderes Fahrzeugkoordinatensystem verwendet werden, z. B. ein dreidimensionales, rechtshändiges Koordinatensystem. Eine Umrechnung der Koordinaten kann dabei unter Ausnutzung des bereits ermittelten Winkels und Abstands zwischen den beiden Körpern erfolgen.

Im nächsten Schritt des Verfahrens wird mindestens ein Ist-Wert mindestens einer Winkelposition aus einer erhaltenen Helligkeitsverteilung berechnet, der eindeutig die Winkelposition der Leuchte bei dem jeweiligen Steuerbefehl angibt. Im letzten Schritt werden Korrekturwerte zur Minimierung einer Differenz zwischen Soll- und Ist-Wert ausgegeben, wobei die Soll-Werte für bestimmte Winkelpositionen, beispielsweise ein orthogonales Auftreffen des Lichts auf den Körper, bereits in Abhängigkeit von Abstand und Winkelversatz voreingestellt und abgespeichert sind. Eine orthogonal auf die Oberfläche auftreffende Abstrahlung der Leuchten zeichnet sich in der Helligkeitsverteilung dadurch aus, dass die Breite bzw. Höhe der erhaltenen Helligkeitsverteilung minimal wird.

Dieses Verfahren erlaubt es, auf einfache Art und Weise die Funktionsweise eines lichttechnischen Fahrassistenzsystems zu überprüfen. Besonders vorteilhaft daran ist, dass das Verfahren ohne spezielle Vorbildung des Bedienpersonals in einer Werkstattumgebung eingesetzt werden kann und keine aufwändige Überprüfung, beispielsweise im Rahmen einer Nachtfahrt, mehr nötig ist. Insbesondere ermittelt das Verfahren selbstständig Winkelversatz und Abstand zum Körper, sodass das mit der Durchführung des Verfahrens befasste Bedienpersonal diese Punkte nicht gesondert beachten muss.

Zum Berechnen des Ist-Werts der Schwenkwinkel wird vorzugsweise ein Ort eines charakteristischen Punkts der Helligkeitsverteilung für diese Winkelposition bestimmt und der Ist-Wert aus dem so bestimmten Ort, dem ermittelten Abstand und dem ermittelten Winkelversatz berechnet. Der charakteristische Punkt kann hierbei ein Knickpunkt oder der Anstieg der vertikalen Hell-Dunkel-Grenze (vHDG) sein. Der Ort des charakteristischen Punkts kann durch Bildkoordinaten der erfassten Helligkeitsverteilung definiert sein.

Weist das Fahrzeug mehr als nur eine Leuchte auf, so kann diese weitere Leuchte, sofern dies technisch möglich ist, vorzugsweise auf die kleinstmögliche Lichtverteilung eingestellt und in die äußerste bzw. unterste Stellung gefahren werden, sodass das emittierte Licht nicht auf den Körper trifft. Alternativ kann diese Leuchte auch abgedeckt werden.

In vorteilhafter Weise kann das Fahrzeug bei der Durchführung des Verfahrens mit seiner Längsachse orthogonal zu dem Körper in einem Abstand von zwischen 6 m und 12 m zwischen Leuchte und Oberfläche positioniert werden, wobei mindestens eine Abstrahlungsrichtung der Leuchte auf den Körper trifft. Dies erlaubt es einerseits, Rechenaufwand zur Berechnung eines Winkelversatzes einzusparen, andererseits aber auch Helligkeitsverteilungen in hinreichender Qualität zu erhalten, da bei einem kleineren Abstand die Helligkeitsverteilung auf der Oberfläche eventuell zu klein dargestellt wird, sodass eine korrekte Erfassung durch die Bilderfassungseinheit nicht mehr gewährleistet sein kann, während sie bei größerem Abstand unscharf wird und eventuell ebenfalls nicht mehr korrekt erfasst wird.

Das Schwenken der Leuchte in horizontaler und vertikaler Richtung erfolgt in vorteilhafter Weise in zwei Richtungen jeder Achse: startend von einem ersten Extremwert der Schwenkung auf der jeweiligen Achse wird die Leuchte bis zu einem zweiten Extremwert verstellt, anschließend erfolgt die Verstellung in umgekehrter Richtung. Dieses Vorgehen dient dazu, ein eventuell vorhandenes Toleranzspiel zu ermitteln und bei der Ausgabe der Korrekturwerte zu berücksichtigen.

In besonders vorteilhafter Weise kann eine vorgegebene Systemtoleranz, beispielsweise einbaubedingte Winkelfehler, die im Allgemeinen kleiner als 2° sind, derart berücksichtigt werden, dass eine Korrektur dann und nur dann vorgenommen wird, wenn die Differenz zwischen Soll- und Ist-Wert eine Systemtoleranz betragsmäßig übersteigt. Somit wird sichergestellt, dass eine gewisse, beim Einbau des Lichtsystems nie vollständig zu vermeidende Systemtoleranz entsprechend berücksichtigt wird, und erlaubt auch bei nicht exakt eingebauten Leuchten eine fehlerfreie Einstellung durch das Verfahren.

Nachdem die Minimierung der Differenz zwischen Soll- und Ist-Werten erfolgt ist, können weitere Funktionen des Beleuchtungssystems in einer definierten Winkelposition überprüft werden. Vorzugsweise werden hierzu Fern- und Abblendlicht auf korrekte Funktionsweise überprüft. Dies erlaubt es, die komplette Funktion der Leuchte in ihrer Funktionalität zu überprüfen.

In besonders vorteilhafter Weise wird die Differenz zwischen Soll- und Ist-Werten der Winkelpositionen automatisch korrigiert. Somit entfällt eine wiederum fehlerbehaftete Einstellung per Hand.

In besonders vorteilhafter Weise wird das Verfahren zum Überprüfen von weiteren Leuchten des Fahrzeugs eingesetzt. Hierbei werden die gleichen Schritte, die für die Überprüfung der ersten Leuchte eingesetzt wurden, auch für die Überprüfung mindestens einer weiteren Leuchte durchgeführt. Aus den daraus erhaltenen Daten kann auch die korrekte Funktionsweise des Verfahrens ermittelt werden, da die errechneten Positionsdaten des Körpers bei allen Durchgängen übereinstimmen müssen, ansonsten arbeitet das Verfahren fehlerhaft.

Eine Vorrichtung zur Durchführung des beschriebenen Verfahrens umfasst neben mindestens einer Leuchte eine Bilderfassungseinheit, eine Auswerte- und eine Ausgabeeinheit. Zur Erfassung von Stereobildern kann auch mehr als eine Bilderfassungseinheit vorgesehen sein. Die Bilderfassungseinheit nimmt dabei die von der Leuchte in verschiedenen Winkelpositionen auf einem Körper erzeugten Helligkeitsverteilungen auf, leitet diese an eine Auswerteeinheit weiter, wobei die Auswerteeinheit über eine Bildverarbeitung Ist-Werte der Winkelposition und Korrekturwerte berechnet und diese Korrekturwerte als Einstellempfehlung an die Ausgabeeinheit weiterleitet. Die Ausgabeeinheit gibt diese Einstellempfehlungen zur Minimierung einer Differenz zwischen voreingestellten Soll- und Ist-Werten schließlich aus.

Vorteilhaft ist, wenn der Körper eine Wand mit einer vorzugsweise planen Oberfläche ist und eine hohe Albedo aufweist, beispielsweise durch eine weiße Färbung. Somit wird sichergestellt, dass eine klar erkennbare Helligkeitsverteilung auf dem Körper von der Bilderfassungseinheit erfasst werden kann, ohne dass zu viel Helligkeit absorbiert wurde.

Weiter ist es vorteilhaft, die Einstellung der vertikalen Winkelpositionen durch eine in der Regel in einem Fahrzeug bereits vorhandene Leuchtweiteregulierung vorzunehmen. Vorzugsweise werden mindestens drei, besonders vorzugsweise sechs verschiedene Werte der Leuchtweiteregulierung eingestellt und überprüft. Somit kann auch die korrekte Funktion eines zur Leuchtweiteregulierung verwendeten Aktors überprüft werden.

Ausführungsbeispiele der Erfindung sind in den Zeichnungen dargestellt und werden nachfolgend anhand der Figuren 1 bis 4 erläutert. Es zeigen:
- Fig. 1: eine schematische Darstellung der Erzeugung von Helligkeitsverteilungen auf einem Körper;
- Fig. 2: ein Ablaufschema eines erfindungsgemäßen Verfahrens,
- Fig. 3: eine schematische Darstellung eines Verfahrens zum Ermitteln eines Abstands zwischen Leuchte und Körper und
- Fig. 4: eine schematische Darstellung einer Helligkeitsverteilung mit einem charakteristischen Knickpunkt.

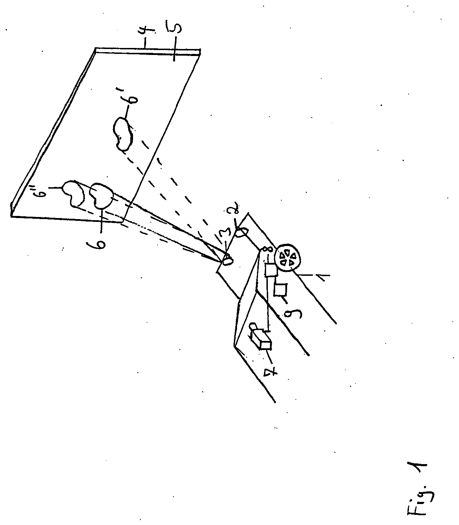

Fig. 1 stellt schematisch die Erzeugung von Helligkeitsverteilungen auf einem Körper durch eine Leuchte eines Fahrzeugs dar. Ein Fahrzeug 1, in diesem Fall ein Automobil, weist ein lichttechnisches Fahrassistenzsystem auf und hat zwei Frontscheinwerfer 2, 3 als Leuchten, von denen ein Scheinwerfer, im dargestellten Fall der rechte Scheinwerfer 2, ausgeschaltet oder abgedeckt ist. Der linke Scheinwerfer 3 ist auf Abblendlicht eingestellt und wirft eine Helligkeitsverteilung 6 an eine weiß gestrichene Wand 4 mit planer Oberfläche 5. Die Helligkeitsverteilung 6 ist dabei asymmetrisch, eine Seite wird in Abhängigkeit von der Verkehrsrichtung stärker ausgeleuchtet, d. h. bei Fahrzeugen, die im Rechtsverkehr unterwegs sein sollen, wird die rechte Seite stärker ausgeleuchtet, bei Linksverkehr die linke. Die Wand 4 kann dabei eine Wand eines Gebäudes, aber auch eine bewegliche Stellwand sein. Stattdessen kann aber auch ein Tor, beispielsweise ein Werkstatttor, benutzt werden.

Der Abstand zwischen Fahrzeug und Wand beträgt in diesem Fall 8 m, die senkrechte auf die Vorderachse stehende Längsachse des Fahrzeugs weist im rechten Winkel auf die Wand, sodass die Vorderachse des Fahrzeugs parallel zur Wand gestellt ist. Im Fahrzeug ist eine Bilderfassungseinheit 7 enthalten, hier eine Kamera hinter der Windschutzscheibe, die die von dem Scheinwerfer 3 auf der Wand 4 erzeugte Helligkeitsverteilung 6 aufnimmt und über eine mit der Bilderfassungseinheit 7 verbundene Auswerteeinheit 8 die Ist-Werte der Winkelpositionen berechnet. Im vorliegenden Fall ist die Auswerteeinheit 8 ein Computer, der entweder im Fahrzeug fest montiert ist oder beispielsweise in einer Werkstatt stehen und an verschiedene Fahrzeuge bewegt und angeschlossen werden kann. Die Bildverarbeitung kann dabei abhängig von der verwendeten Linse, dem Leuchtmittel der Leuchte oder anderen Faktoren zwar Bildfehler aufweisen, die Bestimmung der Winkelposition ist dennoch hinreichend genau, da diese systematischen Fehler bei allen mit dem jeweiligen System aufgenommenen Bildern auftritt, und somit bei der Bildverarbeitung berücksichtigt werden können.

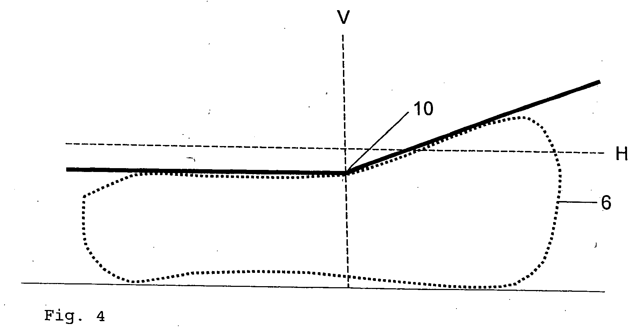

Die Bildverarbeitung kann die Position eines Knickpunktes 10 als charakteristischen Punkt aus der Helligkeitsverteilung 6 bestimmen, alternativ auch einen Anstieg der vertikalen Hell-Dunkel-Grenze, und somit durch die Position des Knickpunkts 10 oder des Anstiegs die Helligkeitsverteilung 6 eindeutig kennzeichnen. Der Knickpunkt 10 ist, wie in Fig. 4 dargestellt, integraler Bestandteil einer Abblendlichtverteilung und durch den Schnittpunkt einer horizontal verlaufenden Abschneidelinie mit einer schräg verlaufenden Begrenzungslinie definiert. Der Knickpunkt 10 befindet sich zwischen 0,5° und 0,6°, vorzugsweise 0,57°, unterhalb der optischen Achse. In Fig. 4, die die Helligkeitsverteilung 6 auf der Wand 4 zeigt, ist der Knickpunkt 10 gut zu erkennen.

Die Auswerteeinheit berechnet Korrekturwerte und sendet diese an eine Ausgabeeinheit 9, die die Korrekturwerte zur Minimierung einer Differenz zwischen voreingestellten Soll- und berechneten Ist-Werten ausgibt. Die Soll-Werte sind dabei in einem Speicher der Auswerteeinheit 8 bereits enthalten, die Ausgabeeinheit 9 besteht aus einem im Fahrzeug angebrachten Bildschirm, beispielsweise des Navigationsgeräts, oder einem außerhalb des Fahrzeugs befindlichen Bildschirm. Die Korrekturwerte werden dabei beispielsweise als Anzahl von Umdrehungen an einer hier nicht dargestellten Einstellschraube der Scheinwerfer 3 ausgegeben. Bei der Ausgabe der Korrekturwerte wurde von der Auswerteeinheit 8 bereits eine vorgegebene Systemtoleranz berücksichtigt, die als Sicherheitsgröße auf die als Einstellwerte ausgegebenen Korrekturwerte addiert wurde.

In einer vorteilhaften Weiterbildung, die hier allerdings nicht dargestellt ist, werden die Korrekturwerte nicht nur als Einstellempfehlungen ausgegeben, sondern über einen Motor bereits automatisch korrigiert.

Sobald die Korrektur der Ist-Werte abgeschlossen ist und diese mit den Soll-Werten übereinstimmen, werden weitere Funktionen des Beleuchtungssystems, wie das fehlerfreie Funktionieren von Fern- oder Abblendlicht, überprüft. Dazu wird der Scheinwerfer in eine 0°-Position bewegt, d. h. das erzeugte Licht fällt senkrecht auf die Wand.

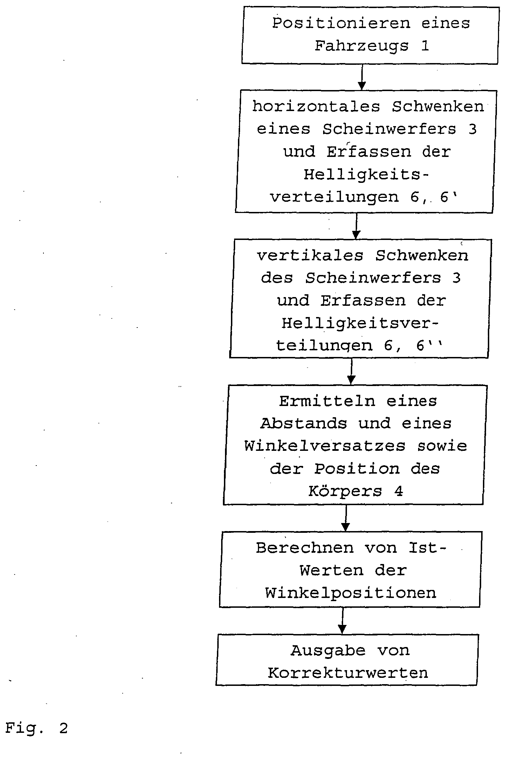

In Fig. 2 ist ein schematischer Ablaufplan des Verfahrens dargestellt, der die zur Durchführung des erfindungsgemäßen Verfahrens mit der beschriebenen Vorrichtung durchzuführenden Schritte in der jeweiligen zeitlichen Abfolge darstellt. Zunächst wird der Scheinwerfer 3 in horizontaler Richtung verschwenkt und man erhält mindestens eine Helligkeitsverteilung 6'. Hierbei wird vom linken Anschlagpunkt gestartet und die Verstellung geschieht in Schritten von 1° bis zum rechten Anschlagpunkt. Der Winkelbereich der horizontalen Verstellung beträgt im vorliegenden Fall +15° bis -7°, was insgesamt 23 unterschiedlichen Helligkeitsverteilungen entspricht. In der Regel sind die Winkelbereiche asymmetrisch um die 0°-Position verteilt, da in einer Richtung eine Begrenzung der Schwenkung durch die Fahrzeugkarosserie erfolgt. Anschließend werden die gleichen Winkelpositionen in umgekehrter Richtung durchfahren. Auf diese Weise wird ein Toleranzspiel ermittelt.

Nach der horizontalen Schwenkung wird der Scheinwerfer 3 wieder in die Ausgangsposition verfahren und vertikal verstellt, wobei diese Verstellung im dargestellten Fall durch eine entsprechende Einstellung der Leuchtweiteregulierung vorgenommen wird. Hierdurch erhält man mindestens eine weitere Helligkeitsverteilung 6". Beim vertikalen sowie horizontalen Verstellen des Scheinwerfers 3 werden mindestens drei Helligkeitsverteilungen aufgenommen. Mit drei erhaltenen Messwerten ist das Verfahren bereits durchführbar, für eine Prüfung der Plausibilität sollten allerdings mindestens sechs Helligkeitsverteilungen aufgenommen werden. Somit wird die Datenbasis verbreitert und die Genauigkeit des Verfahrens wird durch mehr Messwerte erhöht. Damit ist auch überprüfbar, ob der Aktor der Leuchtweiteregulierung korrekt funktioniert.

Durch trigonometrische Verfahren werden nun der Abstand und ein möglicher Winkelversatz zwischen Scheinwerfer 3 und planer Oberfläche 5 berechnet, außerdem wird die Position der Wand 4 im Koordinatensystem des Fahrzeugs 1 bestimmt.

Aus dem Ort eines charakteristischen Punkts der Helligkeitsverteilung für die jeweilige Winkelposition, dem ermittelten Abstand und dem ermittelten Winkelversatz werden Ist-Werte des Schwenkwinkels berechnet. Der Ort des charakteristischen Punkts ist durch die Bildkoordinaten der durch die Bilderfassungseinheit 7 erfassten Helligkeitsverteilung 6, 6', 6" definiert.

Die aus den Helligkeitsverteilungen 6, 6', 6" bestimmten Ist-Werte der Winkelposition des Scheinwerfers 3 werden mit eingestellten Soll-Werten verglichen. Im letzten Schritt des Verfahrens werden schließlich Korrekturwerte zwischen Ist- und Soll-Werten gebildet, die die Differenz zwischen diesen beiden Werten minimieren sollen.

Sobald das Verfahren für den Scheinwerfer 3 abgeschlossen ist, wird dieser ausgeschaltet bzw. abgedeckt und die gleichen Schritten für die zweite Leuchte 2 durchgeführt. Dabei wird auch überprüft, ob das Verfahren korrekt funktioniert, da nur dann die berechneten Positionen des Körpers bei durch unterschiedliche Scheinwerfer erzeugten Helligkeitsverteilungen übereinstimmen.

Durch das Verfahren wird somit sichergestellt, dass der Scheinwerfer 3 funktionstüchtig ist und korrekt eingestellt wurde. Weiter wird sichergestellt, dass der Datentransfer zwischen Kamera und Scheinwerfer funktioniert.

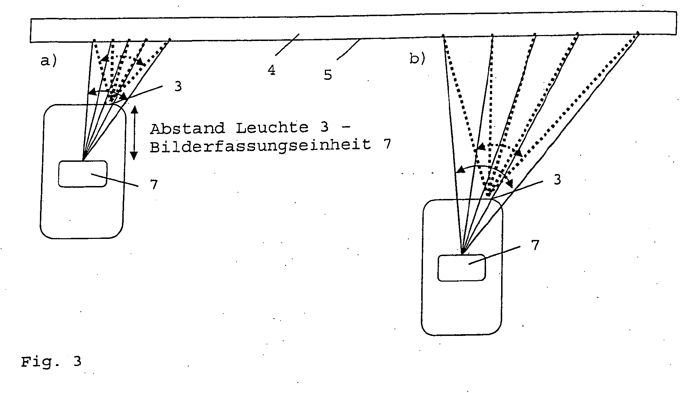

Fig. 3 stellt schematisch dar, wie ein Verfahren zur Bestimmung des Abstands zwischen Scheinwerfer 3 und planer Oberfläche 5 funktioniert. Hierzu wird der Schwenkbereich des Scheinwerfers 3 für zwei unterschiedliche Entfernungen des Fahrzeugs von der Wand dargestellt. Der Schwenkbereich ist in Fig. 3 durch gestrichelte Linien dargestellt. In Fig. 3a) ist das Fahrzeug näher als in Fig. 3b) an der planen Oberfläche 5 der Wand 4. Der Winkel, um den geschwenkt wird, ist in beiden Fällen jedoch identisch. Weiterhin ist der Abstand zwischen Scheinwerfer 3 und Bilderfassungseinheit 7 bekannt und konstant. Die Bilderfassungseinheit 7, hier wiederum eine Kamera, erfasst nun den Schwenkbereich des Scheinwerfers durch die auf der planen Oberfläche 5 erzeugten Helligkeitsverteilungen 6, 6', 6". Dieser Erfassungsbereich ist durch durchgezogene Linien dargestellt. Die Breite des von der Bilderfassungseinheit erfassten Bereichs ist nun abhängig von der Positionsdifferenz zwischen Scheinwerfer 3 und Bilderfassungseinheit 7 sowie von der Entfernung zwischen Scheinwerfer 3 und planer Oberfläche 5. In großer Entfernung zwischen Scheinwerfer 3 und planer Oberfläche 5, d. h. falls diese Entfernung deutlich größer als der Abstand zwischen Scheinwerfer 3 und Bilderfassungseinheit 7 ist, sind Schwenkwinkel des Scheinwerfers 3 und die entfernungsabhängige Breite der von der Bilderfassungseinheit 7 detektierten Helligkeitsverteilungen 6, 6', 6" gleich groß. In geringer Entfernung (wiederum bezogen auf den Abstand zwischen Scheinwerfer 3 und Bilderfassungseinheit 7) sinkt die von der Bilderfassungseinheit 7 beobachtete Breite, bis sie lediglich noch als Punkt detektiert werden kann, wenn der Abstand zwischen Scheinwerfer 3 und planer Oberfläche 5 und der Abstand zwischen Scheinwerfer 3 und Bilderfassungseinheit 7 gleich groß sind.

Aus der beobachteten Breite und dem bekannten Abstand zwischen Scheinwerfer 3 und Bilderfassungseinheit 7 sowie dem ebenfalls bekannten Schwenkwinkel der Leuchte lässt sich somit trigonometrisch der Abstand zwischen planer Oberfläche 5 und Scheinwerfer 3 berechnen. Ferner kann darüber auch ein eventuell vorhandener Winkelversatz zwischen der Fahrzeugachse und der Wand ermittelt werden.

Fig. 4 stellt eine Helligkeitsverteilung 6 dar, die asymmetrisch verläuft, da der die Helligkeitsverteilung 6 erzeugende Scheinwerfer 3 für Rechtsverkehr ausgelegt ist und den Fahrbahnrand besonders ausleuchten soll. Die Helligkeitsverteilung 6 weist einen Knickpunkt 10 am Übergang von einer horizontal zu einer schräg verlaufenden Begrenzungslinie auf. Dieser Knickpunkt kann über die Bilderfassungseinheit 7 für jede Helligkeitsverteilung erfasst werden, wobei der Ort des Knickpunkts 10 durch Bildkoordinaten ausgedrückt wird. Der Ort des Knickpunkts 10 ist ein charakteristisches Merkmal jeder Helligkeitsverteilung.

## Patentansprüche

1. Verfahren zur Überprüfung eines lichttechnischen Fahrassistenzsystems eines Fahrzeugs (1) mit mindestens einer Leuchte und mindestens einer Bilderfassungseinheit (7), umfassend die folgenden Schritte:
a) Positionieren des Fahrzeugs (1) vor einem Körper (4) derart, dass mindestens eine Abstrahlungsrichtung der Leuchte auf den Körper (4) zeigt;
b) Einstellen der mindestens einen Leuchte in mehrere Winkelpositionen durch Schwenken der Leuchte um mindestens einen definierten Winkel in horizontaler und/oder vertikaler Richtung und Erfassen der auf dem Körper erhaltenen Helligkeitsverteilung (6) für jede der Winkelpositionen der Leuchte durch die Bilderfassungseinheit (7);
**dadurch gekennzeichnet, dass** es die folgenden Schritte umfasst:
c) Ermitteln eines Abstands und eines Winkelversatzes zwischen Fahrzeug (1) und Körper (4) aus den erhaltenen Helligkeitsverteilungen (6, 6', 6") sowie Berechnen einer Position des Körpers (4) im Koordinatensystem des Fahrzeugs (1);
d) Berechnen mindestens eines Ist-Werts eines Schwenkwinkels der Leuchte für mindestens eine der Winkelpositionen aus den erhaltenen Helligkeitsverteilungen (6, 6', 6");
e) Ausgabe von mindestens einem Korrekturwert zur Minimierung einer Differenz zwischen voreingestelltem Soll- und berechnetem Ist-Wert des Schwenkwinkels der Leuchte.

2. Verfahren nach Anspruch 1, **dadurch gekennzeichnet, dass** zum Berechnen des Ist-Wertes des Schwenkwinkels ein Ort eines charakteristischen Punkts der Helligkeitsverteilung (6, 6', 6") für diese Winkelposition bestimmt wird und der Ist-Wert aus dem so bestimmten Ort, dem ermittelten Abstand und dem ermittelten Winkelversatz berechnet wird.

3. Verfahren nach Anspruch 1 oder 2, **dadurch gekennzeichnet, dass** das Fahrzeug (1) mit seiner Längsachse orthogonal zu dem Körper (4) positioniert wird, sodass die Abstrahlungsrichtung der Leuchte orthogonal auf einer vorzugsweise planen Oberfläche (5) des Körpers (4) steht, besonders vorzugsweise mit einem Abstand von zwischen 6 m und 12 m zwischen Leuchte und planer Oberfläche (5).

4. Verfahren nach einem der vorhergehenden Ansprüche, **dadurch gekennzeichnet, dass** das horizontale und vertikale Einstellen des Schwenkwinkels der Leuchte ausgehend von einem ersten Extremwert einer Schwenkung um eine jeweilige Achse in einer Richtung bis zu einem zweiten Extremwert und anschließend ausgehend von dem zweiten Extremwert das Einstellen der Positionen in entgegengesetzter Richtung bis zu dem ersten Extremwert geschieht, um ein Toleranzspiel zu ermitteln.

5. Verfahren nach einem der vorhergehenden Ansprüche, **dadurch gekennzeichnet, dass** eine Korrektur dann und nur dann vorgenommen wird, wenn die Differenz zwischen Soll- und Ist-Wert eine Systemtoleranz betragsmäßig übersteigt.

6. Verfahren nach einem der vorhergehenden Ansprüche, **dadurch gekennzeichnet, dass** nach der Minimierung der Differenz zwischen Soll- und Ist-Werten weitere Funktionen, vorzugsweise Fernlicht und Abblendlicht, in einer festgelegten Winkelposition überprüft werden.

7. Verfahren nach einem der vorhergehenden Ansprüche, **dadurch gekennzeichnet, dass** die Differenz zwischen Soll- und Ist-Wert des Schwenkwinkels der Leuchte automatisch korrigiert wird.

8. Verfahren nach einem der vorhergehenden Ansprüche, **dadurch gekennzeichnet, dass** durch Überprüfung einer weiteren Leuchte und Vergleich der berechneten Position des Körpers (4) auf Basis der hierbei ermittelten Helligkeitsverteilungen (6, 6', 6") die korrekte Funktionsweise des Verfahrens überprüft wird.

9. Vorrichtung zur Überprüfung eines lichttechnischen Fahrassistenzsystems eines Fahrzeugs (1) mit mindestens einer Leuchte, mindestens einer Bilderfassungseinheit (7), einer Auswerteeinheit (8) und einer Ausgabeeinheit (9), wobei die mindestens eine Bilderfassungseinheit (7) derart ausgestaltet ist, von der mindestens einen Leuchte in verschiedenen Winkelpositionen auf einer Oberfläche (5) eines Körpers (4) erzeugte Helligkeitsverteilungen (6, 6', 6") zu erfassen und über eine Ausgabeeinheit (9) Einstellempfehlungen zur Minimierung einer Differenz zwischen voreingestellten Soll- und berechneten Ist-Werten ausgebbar sind, **dadurch gekennzeichnet, dass** die Auswerteeinheit (8) eingerichtet ist, einen Winkelversatz und einen Abstand zwischen Fahrzeug (1) und Körper (4) zu ermitteln,
wobei die Auswerteeinheit (8) eingerichtet ist, die Ist-Werte des Schwenkwinkels der Leuchte aus den Helligkeitsverteilungen (6, 6', 6") aus einem Ort eines charakteristischen Punkts der Helligkeitsverteilung, dem ermittelten Winkelversatz und dem ermittelten Abstand zu berechnen.

10. Vorrichtung nach Anspruch 9, **dadurch gekennzeichnet, dass** die vorzugsweise plane Oberfläche (5) des Körpers (4) durch eine Wand gebildet ist und eine hohe Albedo, vorzugsweise durch eine weiße Färbung, aufweist.

11. Vorrichtung nach Anspruch 9 oder 10, **dadurch gekennzeichnet, dass** die vertikalen Schwenkwinkel der Leuchte durch eine Leuchtweiteregulierung einstellbar sind.

## Claims

1. A method for testing a lighting driving assistance system of a vehicle (1) with at least one lamp and at least one picture acquisition unit (7), comprising the following steps:
a) positioning the vehicle (1) in front of a body (4) in a manner such that at least one beaming direction of the lamp is aimed onto the body (4);
b) setting the at least one lamp in several angular positions by way of pivoting the lamp about at least one defined angle in the horizontal and/or vertical direction and acquiring the brightness distribution (6) obtained on the body, for each of the angular positions of the lamp, by way of the picture acquisition unit (7);
**characterized in that** the method comprises the following steps:
c) determining a distance and an angular offset between the vehicle (1) and the body (4) from the obtained brightness distributions (6, 6', 6") as well as computing a position of the body (4) in the coordinate system of the vehicle (1);
d) computing at least one actual value of a pivot angle of the lamp for at least one of the angular positions, from the obtained brightness distributions (6, 6', 6");
e) issuing at least one corrective value for minimising a difference between the preset desired value and the computed actual value of the pivot angle of the lamp.

2. A method according to claim 1, **characterised in that** for computing the actual value of the pivot mangle, location of a characteristic point of the brightness distribution (6, 6', 6") is determined for this angular position, and the actual value is computed from the thus determined location, from the determined distance and from the determined angular offset.

3. A method according to claim 1 or 2, **characterised in that** the vehicle (1) with its longitudinal axis is positioned orthogonally to the body (4), so that the beaming direction of the lamp is orthogonal on a preferably plane surface (5) of the body (4), particularly preferably with a distance of between 6 m and 12 m between the lamp and the plane surface (5).

4. A method according to one of the preceding claims, **characterised in that** the horizontal and vertical setting of the pivot angle of the lamp, departing from a first extreme value of a pivoting about a respective axis is effected in one direction up to a second extreme value, and subsequently departing from the second extreme value, the setting of the positions is effected in the opposite direction up to the first extreme value, in order to determine a tolerance play.

5. A method according to one of the preceding claims, **characterised in that** a correction is carried out if and only if the difference between the desired value and actual value, with regard to magnitude exceeds a system tolerance.

6. A method according to one of the preceding claims, **characterised in that** further functions, preferably high beam and low beam are tested in a fixed angular position, after the minimisation of the difference between the desired values and actual values.

7. A method according to one of the preceding claims, **characterised in that** the difference between the desired value and actual value of the pivot angle of the lamp is automatically corrected.

8. A method according to one of the preceding claims, **characterised in that** the correct functioning manner of the method is tested by way of testing a further lamp and the comparison of the computed position of the body (4) on the basis of brightness distributions (6, 6', 6") determined hereby,

9. A device for testing a lighting driving assistance system of vehicle (1) with at least one lamp, with at least one picture acquisition unit (7), an evaluation unit (8) and an issuing unit (9), wherein the at least one picture acquisition unit (7) is designed in a manner so as to acquire brightness distributions (6, 6', 6") produced on a surface of a body (4) by the at least one lamp in different angular positions, and setting recommendations for minimising a difference between preset desired values and computed actual values can be issued via an issuing unit (9), **characterized in that** the evaluation unit (8) is adapted to determine an angular offset and a distance between vehicle (1) and body (4), wherein the evaluation unit (8) is adapted to compute the actual values of the pivot angle of the lamp from the brightness distributions (6, 6', 6") from a location of a characteristic point of the brightness distribution, the determined angular offset and the determined distance,

10. A device according to claim 9, **characterised in that** the preferably plane surface (5) of the body (4) is formed by a wall and has a high albedo, preferably due to a white colouring.

11. A device according to claim 9 or 10, **characterised in that** the vertical pivot angles of the lamp can be set via a headlight levelling.

## Revendications

1. Procédé pour le contrôle d'un système d'assistance de véhicule concernant l'éclairage d'un véhicule (1) avec au moins un feu et au moins une unité de capture d'image (7), comprenant les étapes suivantes:
a) positionnement du véhicule (1) devant un élément (4) de façon à ce qu'au moins une direction d'émission du feu désigne l'élément (4);
b) réglage de l'au moins un feu dans plusieurs positions angulaires par pivotement du feu d'au moins un angle défini dans la direction horizontale et/ou verticale et mesure de la distribution de luminosité (6) obtenue sur l'élément pour chacune des positions angulaires du feu par l'unité de capture d'image (7);
**caractérisé en ce qu'**il comprend les étapes suivantes :
c) détermination d'une distance et d'un décalage angulaire entre le véhicule (1) et l'élément (4) à partir des distributions de luminosité (6, 6', 6") obtenues ainsi que des zones d'une position de l'élément (4) dans le système de coordonnées du véhicule (1) ;
d) calcul d'une valeur réelle d'un angle de pivotement du feu pour au moins une des positions angulaires à partir des distributions de luminosité (6, 6', 6") obtenues ;
e) sortie d'au moins une valeur de correction pour la réduction d'une différence entre la valeur de consigne préréglée et la valeur réelle calculée de l'angle de pivotement du feu.

2. Procédé selon la revendication 1, **caractérisé en ce que**, pour le calcul de la valeur réelle de l'angle de pivotement, un emplacement d'un point caractéristique de la distribution de luminosité (6, 6', 6") pour cette position angulaire est déterminé et la valeur réelle est calculée à partir de l'emplacement ainsi déterminé, de la distance déterminée et du décalage angulaire déterminé.

3. Procédé selon la revendication 1 ou 2, **caractérisé en ce que** le véhicule (1) est positionné, avec son axe longitudinal, de manière orthogonale par rapport à l'élément (4), de façon à ce que la direction d'émission du feu soit orthogonale par rapport à une surface (5), de préférence plane, de l'élément (4), plus particulièrement de préférence avec une distance entre 6 m et 12 m entre le feu et la surface plane (5).

4. Procédé selon l'une des revendications précédentes, **caractérisé en ce que** le réglage horizontal et vertical de l'angle de pivotement du feu a lieu à partir d'une première valeur extrême d'un pivotement autour d'un axe correspondant dans une direction jusqu'à une deuxième valeur extrême puis à partir de la deuxième valeur extrême, le réglage des positions a lieu dans la direction opposée jusqu'à la première valeur extrême, afin de déterminer un jeu de tolérance.

5. Procédé selon l'une des revendications précédentes, **caractérisé en ce qu'**une correction est effectuée si et seulement si la différence entre la valeur de consigne et la valeur réelle dépasse en valeur absolue une tolérance du système.

6. Procédé selon l'une des revendications précédentes, **caractérisé en ce que**, après la réduction de la différence entre la valeur de consigne et la valeur réelle, d'autres fonctions, de préférence le feu de route et le feu de croisement, sont contrôlés dans une position angulaire déterminée.

7. Procédé selon l'une des revendications précédentes, **caractérisé en ce que** la différence entre la valeur de consigne et la valeur réelle de l'angle de pivotement est automatiquement corrigée.

8. Procédé selon l'une des revendications précédentes, **caractérisé en ce que** le contrôle d'un autre feu et la comparaison de la position calculée de l'élément (4) sur la base des distributions de luminosité (6, 6', 6") déterminée permettent le contrôle du fonctionnement correct du procédé.

9. Dispositif de contrôle d'un système d'assistance de véhicule concernant l'éclairage d'un véhicule (1) avec au moins un feu, au moins une unité de capture d'image (7), une unité d'analyse (8) et une unité de sortie (9), l'au moins une unité de capture d'image (7) étant conçue de façon à déterminer les distributions de luminosité (6. 6', 6") générées par l'au moins un feu dans différentes positions angulaires sur une surface (5) d'un élément (4) et une unité de sortie (9) permettant de générer des recommandations de réglage pour la réduction d'une différence entre la valeur de consigne préréglée et la valeur réelle calculée, **caractérisé en ce que** l'unité d'analyse (8) est conçue pour déterminer un décalage angulaire et une distance entre le véhicule (1) et l'élément (4),
l'unité d'analyse (8) étant conçue pour calculer les valeurs réelles de l'angle de pivotement du feu à partir des distributions de luminosité (6, 6', 6") à partir d'un emplacement d'un point caractéristique de la distribution de luminosité, du décalage angulaire déterminé et de la distance déterminée.

10. Dispositif selon la revendication 9, **caractérisé en ce que** la surface (5), de préférence plane, de l'élément (4) est constituée d'une paroi et présente un albédo élevé, de préférence grâce à une coloration blanche.

11. Dispositif selon la revendication 9 ou 10, **caractérisé en ce que** les angles de pivotement du feu peuvent être réglés à l'aide d'une régulation de la portée d'éclairage.
